# EUROPÄISCHE PATENTSCHRIFT

(11) **EP 2 789 990 B1**
(45) Veröffentlichungstag und Bekanntmachung des Hinweises auf die Patenterteilung: **16.03.2016**
(21) Anmeldenummer: 13163017.0
(22) Anmeldetag: 10.04.2013
(51) Int. Cl.: G01D 5/06, G01D 11/30, F16L 55/48

(54) **Mobiles Detektionsgerät für magnetische Stopfen in Rohrsystemen**
Mobile detection apparatus for magnetic plugs in pipework systems
Appareil de détection mobile de bouchons magnétiques dans des systèmes de conduites

(43) Veröffentlichungstag der Anmeldung: 15.10.2014
(73) Patentinhaber: Enrichment Technology Company Ltd. Zweigniederlassung Deutschland, 52409 Jülich (DE)
(72) Erfinder: Klose, Heiko, 45549 Sprockhövel (DE); Herking, Hermann-Josef, 48599 Gronau-Epe (DE); Meulenkamp, Thomas, 48599 Gronau-Epe (DE); Böckers, Rudolf, 48619 Heek (DE); Weßeling, Bruno, 48599 Gronau-Epe (DE)
(74) Vertreter: Jostarndt, Hans-Dieter

(56) Entgegenhaltungen:
- DE-A1- 3 122 643
- FR-A1- 2 817 322
- JP-A- 2010 237 093
- US-A- 5 506 505
- US-A1- 2010 295 543

## Beschreibung

### Gebiet der Erfindung

Die Erfindung bezieht sich auf ein mobiles Gerät zur Lokalisierung von Stopfen in einem Rohrsystem und auf ein entsprechendes Verfahren zur Lokalisierung dieser Stopfen.

### Hintergrund der Erfindung

Rohrsysteme werden für Zu- und/oder Ableitungen von Medien für verschiedenste technische Anwendungen verwendet. Je nach Anwendung können diese Rohrsysteme eine große Länge und/oder eine komplizierte Struktur mit einen verzweigten Netz an Rohrleitungen aufweisen. Ein solches Rohrsystem besteht aus einer Vielzahl an miteinander verbundenen Rohrleitungen, die in der Regel miteinander verschweißt sind. Dem eigentlichen Schweißvorgang vorangestellt ist eine Schweißnahtvorbereitung, die u.a. eine mechanische Bearbeitung des Rohrendes umfassen kann. Solche Bearbeitungen können beispielsweise Sägearbeiten am Rohrende zur Herstellung der benötigten Rohrlänge oder eine Bearbeitung der Schweißfläche am Rohrende umfassen, die Späne, Metall- oder Plastikteile oder Staub verursachen. Insbesondere Aluminiumrohre benötigen für spätere Schweißarbeiten zur Zusammenfügung zu einem Rohrsystem eine geeignete Schweißnahtvorbereitung, damit eine qualitativ gute Schweißnaht zwischen den Aluminiumrohren hergestellt werden kann. Außerdem können Werkstücke bei der Schweißnahtvorbereitung in die noch offenen Rohrenden fallen. Bei ausgedehnten Rohrsystemen kann das Entfernen eines in das Rohrsystem gefallenen Teils sehr aufwendig sein. Außerdem können die Verunreinigungen bei der Schweißnahtvorbereitung das Innere des Rohrsystems verschmutzen, was gerade bei technischen Anwendungen, die eine hohe Reinheit der in Rohrsystem transportierten Medien voraussetzen, verhindert werden muss.

Um zu verhindern, dass Verunreinigungen oder Werkstücke oder andere Teile in das Rohrsystem gelangen können, werden die offenen Rohrenden mit sogenannten Stopfen innen verschlossen. Für die Schweißnahtvorbereitung können die Stopfen nicht als Kappe über die offenen Rohrenden gestülpt werden, sondern müssen für eine freie Zugänglichkeit des Rohrendes für die Schweißnahtvorbereitung im Bereich des Rohrendes innerhalb des Rohres in einem gewissen Abstand zum Rohrende angebracht werden. Der Abstand des Stopfens im Rohr zum Rohrende ergibt sich aus dem für die Schweißnahtvorbereitung benötigten Arbeitsraum um das Rohrende herum, beispielsweise bei einer beabsichtigten Kürzung des Rohres muss der Stopfen entsprechend tief im Rohr angeordnet werden. Diese Stopfen werden typischerweise im Rohr festgeklemmt. Dazu sind diese Stopfen zumindest teilweise aus einem Gummimaterial hergestellt und besitzen einen vergrößerbaren Durchmesser, beispielsweise ein konisch geformter Gummistopfen, der mittels eines Gewindes mit Hilfe einer Gewindestange gespreizt werden kann, so dass der Gummistopfen an der Rohrinnenseite eines zylinderförmigen Rohres festgeklemmt wird. Andere Stopfen besitzen einen umlaufenden Gummiring, der zwischen zwei kreisförmigen Platten angeordnet ist. Der Abstand dieser Platten zueinander kann mittels einer Flügelmutter verringert werden, so dass sich der Gummiring nach außen wölbt und der Stopfen somit an der Innenseite eines zylindrischen Rohres festgeklemmt wird.

Diese Stopfen begrenzen den Bereich des Rohres, der während der Schweißnahtvorbereitung durch die Bearbeitungsvorgänge verschmutzt werden kann, auf den Abschnitt zwischen Stopfen und Rohrende. Nach Beendigung der Schweißnahtvorbereitung wird dieser Abschnitt gereinigt, und anschließend wird der Stopfen wieder entfernt. Leider werden gerade beim Aufbau von komplexen und langen Rohrsystemen immer wieder Stopfen vor dem Anbringen des nächsten Rohres nicht entfernt, so dass sich nach Fertigstellung des Rohrsystems solche vergessenen Stopfen weiterhin innerhalb des Rohrsystems befinden und dieses zumindest teilweise verschließen und dadurch die Funktion des Rohrsystems beeinträchtigen oder lahmlegen. Durch Abzählen der verwendeten Stopfen und der nach Abschluss der Arbeiten wieder entfernten Stopfen lässt sich zwar die Anzahl der noch im Rohrsystem befindlichen Stopfen feststellen, allerdings ist die Position der vor Inbetriebnahme des Rohrsystems zu entfernenden Stopfen unbekannt. Gerade bei komplexen und langen Rohrsystemen scheidet eine Demontage des gesamten Rohrsystems aufgrund des hohen Aufwands und der damit verbundenen Kosten in der Regel aus. Daher wird versucht, die Position des Stopfens festzustellen, damit lediglich ein kleiner Rohrabschnitt mit dem zu entfernenden Stopfen abgetrennt und ein neuer Rohrabschnitt dort eingesetzt werden muss. Da die Rohre in der Regel nicht transparent sind und der Stopfen mechanisch nach außen nicht sichtbar ist, werden heutzutage von den Rohrabschnitten, in denen Stopfen vermutet werden, Röntgenaufnahmen zur Lokalisierung der Stopfen angefertigt.

Die Anfertigung von Röntgenaufnahmen von Rohrabschnitten ist sehr aufwendig, insbesondere da die Position eines zu entfernenden Stopfens bestenfalls ungefähr bekannt ist und somit viele Aufnahmen zu einer erfolgreichen Lokalisierung angefertigt werden müssen. Bei manchen Rohrsystemen können auch bestimmte Rohrabschnitte, in denen sich ein solcher Stopfen befinden könnte, unzugänglich für die Röntgenuntersuchung sein. Andere Techniken wie beispielsweise das Abklopfen eines Rohres sind zwar einfacher anwendbar, liefern dagegen aber nur ungenaue Ergebnisse, so dass hier gegebenenfalls Rohrabschnitte fälschlicherweise abgetrennt werden, in denen sich der zu suchende Stopfen doch nicht befand. Es ist daher wünschenswert, solche im Rohrsystem fälschlicherweise verbliebenen Stopfen mit geringem Aufwand möglichst schnell und zuverlässig lokalisieren zu können, damit diese dann gezielt über einen Austausch des betreffenden Rohrabschnitts entfernt werden können.

### Zusammenfassung der Erfindung

Es ist eine Aufgabe der vorliegenden Erfindung, eine Vorrichtung und ein Verfahren bereitzustellen, mit denen in einem Rohrsystem fälschlicherweise verbliebenen Stopfen mit geringem Aufwand möglichst schnell und zuverlässig für eine nachfolgende Entfernung lokalisieren werden können.

Diese Aufgabe wird gelöst durch ein mobiles Gerät zur Lokalisierung von zumindest teilweise magnetischen Stopfen mit unbekannter Position in einem Rohrsystem mit einen Messkopf, umfassend einen Messkopfkörper und mindestens zwei Kontaktelemente mit jeweils einer Kontaktfläche, vorgesehen zur kontaktierenden Auflage auf eine äußere Oberfläche des Rohrs des Rohrsystems, wobei jedes der Kontaktelemente mittels geeigneter Befestigungsmittel drehbar am Messkopfkörper gehaltert ist und mindestens eine der Kontaktflächen, vorzugsweise alle Kontaktflächen, mindestens einen Näherungsschalter zur Detektion eines durch den Stopfen erzeugten lokalen magnetischen Feldes umfasst, wobei die Befestigungsmittel so ausgestaltet sind, dass durch die kontaktierende Auflage der Kontaktflächen der oder die Näherungsschalter in einen minimalen Abstand zu der Oberfläche des Rohres unabhängig vom Rohrdurchmesser gebracht werden, sofern der Rohrdurchmesser größer ist als ein erster Abstand zwischen den Kontaktflächen benachbarter Kontaktelemente in einer Position der Kontaktelemente, wo die Kontaktflächen dieser Kontaktelemente gegenüberliegend zueinander ausgerichtet sind, und wobei die Kontaktelemente so ausgeformt sind, dass die Kontaktelemente eine selbststabilisierende Auflageposition der Kontaktflächen auf der Oberfläche des Rohres ermöglichen.

Die Verwendung des erfindungsgemäßen mobilen Geräts macht eine schnelle und zuverlässige Lokalisierung von Stopfen in einem Rohrsystem mit geringem Aufwand möglich. Das mobile Gerät kann allerdings nur bei Rohren angewendet werden, die das magnetische Feld durch den Stopfen nicht abschirmen, also für nicht-ferromagnetische Rohre wie beispielsweise Rohre aus Aluminium, Plastik oder Edelstahl. Die Rohrdurchmesser können dabei beispielsweise DN25 oder mehr betragen, geeignete Wanddicken für Aluminiumrohre für den erfindungsgemäßen Messkopf können beispielsweise zwischen 0,5 mm und 10 mm liegen. Mit dieser Kombination aus geeigneten magnetischen Stopfen zur Abdichtung von Rohrenden, insbesondere für die Schweißnahtvorbereitung, und der Verwendung des erfindungsgemäßen Geräts zur Lokalisierung von Stopfen können diese Stopfen im Falle von fälschlicherweise im Rohrsystem verbliebenen Stopfen mit geringem Aufwand schnell und zuverlässig lokalisiert und somit mit geringen Aufwand durch Abtrennen des betreffenden Rohrabschnitts mit Stopfen und Einfügen eines entsprechenden neuen Rohrabschnitts aus dem Rohrsystem entfernt werden. Das mobile Gerät ist in einer Ausführungsform mit einer Halterung, beispielsweise mit einer Kette, einem Band oder einen Riemen ausgestattet, die über den Kopf des Bedieners gehängt werden kann, damit dieser seine Hände für die Bedienung des Messkopfes frei hat. Damit die Näherungsschalter und die Signaleinheit betrieben werden können, ist das mobile Gerät beispielsweise mit Batterien oder aufladbaren Akkumulatoren ausgestattet, beispielsweise einer 9V Flachbatterie.

Dadurch können andere sehr ungenaue mechanische Lokalisierungsverfahren wie beispielsweise das Abklopfen des Rohres und das Horchen auf unerwartete Geräusche beim Abklopfen vermieden werden. Abklopfgeräusche werden beispielsweise durch Rohrbefestigungen oder Rohranschlüsse beziehungsweise Rohrverzweigungen so verfälscht, dass es zu einer Anzahl an Fehlinterpretationen mit entsprechendem vergeblichem zusätzlichen Aufwand kommen würde. Außerdem brauchen keine Verfahren in Betracht gezogen zu werden, die zu einer Beschädigung des Rohres führen können, wie beispielsweise das manuelle Abfahren des Rohres von außen mit einem starken Permanentmagneten. Ein solches manuelles Verfahren könnte zum einen nur bei Stopfen überwiegend aus einem magnetischen Material angewendet werden, da sonst die magnetische Wirkung des Stopfens zu gering ist, um manuell festgestellt zu werden. Eventuell dafür geeignete Stopfen aus Metall können bei der Anbringung eventuell Bauteile im Rohr wie beispielsweise Ventilklappen beschädigen und sollten daher zur Sicherheit gegenüber inneren Rohrbeschädigungen nicht verwendet werden. Zum anderen befinden sich die Rohre in der Regel in einer magnetisierbaren Umgebung wie beispielsweise Rohrhalterungen oder andere umgebende Gestelle aus Eisen oder beinhalten selber magnetisierbare Materialien, so dass die fühlbare magnetische Wirkung auf den außen vorbeigeführten Permanentmagneten zu gering ist oder aber durch andere Ursachen als ein verbliebener Stopfen verursacht wird. Außerdem beschädigt das Herüberziehen eines starken und damit schweren Permanentmagneten die Rohre, insbesondere wenn die Rohre aus einem weichen Material wie Aluminium gefertigt sind. Das berührungslose Herstellen von Röntgenaufnahmen würde zwar die mechanischen Beschädigungen vermeiden, wäre aber zu aufwendig und in manchen Bereichen eines Rohrsystems aus Platzgründen überhaupt nicht anwendbar. Zusätzlich würde es Schutzmaßnahmen für das Bedienpersonal gegen die Röntgenstrahlung erfordern, was ebenfalls den Aufwand für die Stopfensuche erhöhen würde. Im Gegensatz dazu kann das erfindungsgemäße mobile Gerät bei kleiner Baugröße des Messkopfes praktisch überall eingesetzt werden, erfordert keinerlei vorbereitende oder absichernde Maßnahmen, kann ohne Vorbildung von jedermann ausgeführt werden und detektiert sicher und selektiv die Stopfen, wobei die Untersuchung des Rohres zerstörungsfrei erfolgt, das heißt, es finden keine Beschädigungen der Rohroberseiten oder daran befindlicher Komponenten während der Stopfensuche statt. Der Messkopf des mobilen Geräts stellt dabei eine wesentliche Komponente des mobilen Geräts dar.

Der Begriff "Messkopfkörper" bezeichnet eine Komponente, die zur Halterung der Kontaktelemente dient. Der Messkopfkörper kann dabei jede geeignete Form besitzen und aus jedem dafür geeigneten Material hergestellt sein. Vorzugsweise besteht der Messkopfkörper zumindest zum überwiegenden Teil aus nichtmagnetischem Material, beispielsweise Plastik. Über den Messkopfkörper können beispielsweise die elektrischen Leitungen von dem oder den Näherungsschalter(n) zu den anderen Komponenten des mobilen Geräts geführt werden. In einer Ausführungsform sind die elektrischen Leitungen durch das Material des Messkopfkörpers hindurch verlegt. Der Messkopfkörper kann zusätzliche Montagemittel zur Befestigung des Messkopfes an den anderen Komponenten des mobilen Geräts umfassen.

Der Begriff "Kontaktelement" bezeichnet die Komponente des mobilen Geräts, an der der oder die Näherungsschalter angeordnet sind. Die Näherungsschalter können dabei innerhalb des Kontaktelements oder in einer Vertiefung der Oberfläche des Kontaktelements angeordnet sein. Das Kontaktelement kann jede geeignete Form besitzen, die einerseits eine Befestigung am Messkopfkörper ermöglicht und andererseits geeignet ist, mit einem oder mehreren Näherungsschalter verbunden zu werden beziehungsweise diese zu halten. Vorzugsweise sind die Kontaktelemente so geformt, dass bei einer Ausrichtung des Messkopfes mit dem Messkopfkörper nach oben und den Kontaktelementen nach unten der Schwerpunkt der Kontaktelemente unterhalb des Befestigungspunktes der Kontaktelemente mit dem Messkopfkörper liegt, damit diese aufgrund der Schwerkraft mit der Kontaktfläche nach unten (in Richtung der Gravitationskraft) ausgerichtet sind. Durch eine solche reproduzierbare Ausrichtung lässt sich der Messkopf besonders einfach auf die äußere Oberfläche des Rohres unabhängig von der Orientierung des Rohres aufsetzen, gegebenenfalls mittels einer Kippbewegung des Messkopfes.

Der Begriff "Kontaktfläche" bezeichnet die Fläche des Kontaktelements, die zum Aufsetzen auf die äußere Oberfläche des Rohres vorgesehen ist. Die Kontaktfläche kann dabei jede geeignete geometrische Form besitzen. Vorzugsweise ist die Kontaktfläche eine ebene Fläche, in der der oder die Näherungsschalter angeordnet sind. Dabei kann der Näherungsschalter je nach Ausführungsform von der Kontaktfläche bedeckt sein, wobei er allerdings in der Nähe der Kontaktfläche im Kontaktelement angeordnet ist. Die Dicke des Materials des Kontaktelements zwischen Kontaktfläche und Näherungsschalter beträgt beispielsweise weniger als 1 mm. In einer anderen Ausführungsform ist der Näherungsschalter auf der Kontaktfläche angeordnet. Dies erlaubt eine einfache Ausgestaltung des Kontaktelements und eine einfache Montage des Näherungsschalters. Außerdem wird dadurch sichergestellt, dass der Näherungsschalter nach Aufliegen des Kontaktelements auf der äußeren Oberfläche des Rohres aufliegt und somit seine dichteste Position zum magnetischen Stopfen einnimmt, wodurch lokale Magnetfelder des Stopfens besser detektiert werden können. In einer anderen Ausführungsform umfasst die Kontaktfläche eine Vertiefung, die so ausgestaltet ist, das sie den Näherungsschalter so aufnehmen kann, dass der in der Vertiefung angeordnete Näherungsschalter eine äußere Oberfläche besitzt (bezeichnet hier die Oberfläche des Näherungsschalter, die bei Auflage des Messkopfes auf ein Rohr dem Rohr zugewandt ist), die in einer Ebene mit der übrigen Kontaktfläche außerhalb der Vertiefung liegt. Damit kann eine besonders gute selbststabilisierende Auflageposition erreicht werden

Der Begriff "Befestigungsmittel" bezeichnet alle Mittel, die zu einer drehbar gelagerten Befestigung der Kontaktelemente am Messkopfkörper geeignet sind. In einer Ausführungsform sind die Befestigungsmittel so ausgestaltet, dass die Kontaktelemente entlang einer Drehachse drehbar sind. Hierbei schränkt die Drehachse die Beweglichkeit der Kontaktelemente auf die Drehung um eine Achse ein, was eine gezielte Auflage des Messkopfes auf ein Rohr erleichtert. Gerade bei unübersichtlichen Rohrsystemen wäre das gezielte Platzieren des Messkopfes ohne Sicht auf Messkopf und Rohr mit einem Kugelgelenk (freie räumliche Drehung) als Befestigungsmittel schwieriger zu handhaben als mit einem Befestigungsmittel, das lediglich eine Drehung um eine Drehachse erlaubt.

In einer Ausführungsform sind die Kontaktelemente mittels der Befestigungsmittel so am Messkopfkörper befestigt, dass die resultierenden Drehachsen für die einzelnen Kontaktelemente parallel zueinander ausgerichtet sind. Damit wird sichergestellt, dass alle Kontaktflächen auf ihrer vollen Länge auf der äußeren Oberfläche des Rohres aufliegen können, womit sichergestellt ist, dass sich die Näherungsschalter gleichmäßig (über die gesamte Länge des Näherungsschalters) in der dichteste Position zur äußeren Oberfläche des Rohres befinden. Idealerweise liegen dadurch die Näherungsschalter in ihrer gesamten Länge auf dem Rohr auf. Bei zylinderförmigen Rohren können die Näherungsschalter wegen der Krümmung des Rohres nur in einer Dimension vollständig auf dem Rohr aufliegen. Besitzt das Rohr dagegen ein Rechteckprofil, liegt der oder die Näherungsschalter sogar mit ihrer gesamten Fläche auf dem Rohr auf, was die Detektion der Stopfen weiter erleichtert. Damit kann eine noch schnellere und zuverlässigere Detektion der Stopfen für eine nachfolgende Entfernung erreicht werden.

In einer Ausführungsform besitzen die Kontaktflächen der Kontaktelemente senkrecht zur Drehachse der Kontaktelemente eine erste Ausdehnung, die mindestens einem zweiten Abstand der Kontaktflächen der benachbarten Kontaktelemente zueinander senkrecht zur Drehachse bei einer parallelen Ausrichtung der Kontaktflächen der benachbarten Kontaktelemente in einer Ebene entspricht. Durch die Korrelation der erste Ausdehnung mit dem zweiten Abstand wird einerseits ein sicheres Auflegen des Messkopfes auf das Rohr und danach eine verbesserte selbststabilisierende Auflage des Messkopfes auf dem Rohr erreicht und gleichzeitig ermöglicht, dass der Messkopf variabel für Rohre mit einer großer Variation des Rohrdurchmessers verwendet werden kann, wobei der Benutzer aus Angabe des zweiten Abstand klar ersehen kann, welche Rohrdurchmesser nicht mehr untersucht werden können. Damit kann eine noch schnellere und zuverlässigere Detektion der Stopfen für eine nachfolgende Entfernung erreicht werden.

In einer Ausführungsform ist eine zweite Ausdehnung der Kontaktflächen der Kontaktelemente parallel zur Drehachse größer als die erste Ausdehnung senkrecht zur Drehachse. Dadurch kann der Messkopf stabil auf dem Rohr aufgelegt werden, und ein Verkippen des Messkopfes ist für den Bediener leicht erkennbar beziehungsweise beim Verschieben des Messkopfes über das Rohr spürbar. Damit kann eine noch schnellere und zuverlässigere Detektion der Stopfen für eine nachfolgende Entfernung erreicht werden.

In einer Ausführungsform ist der Näherungsschalter in der Kontaktfläche des Kontaktelementes an einer Position angeordnet, bei der nach selbststabilisierender Auflage des Kontaktelements auf die Oberfläche des Rohres die Position des Näherungsschalters von einer gedachten Linie vom Rohrmittelpunkt zum Befestigungsmittel geschnitten wird. Dadurch wird sichergestellt, dass sich der Näherungsschalter in der selbststabilisierende Auflageposition des Messkopfes auf dem Rohr in dem dichtet möglichen (kleinsten) Abstand zum Rohr befindet beziehungsweise auf dem Rohr tatsächlich aufliegt. Damit kann eine noch schnellere und zuverlässigere Detektion der Stopfen für eine nachfolgende Entfernung erreicht werden.

In einer Ausführungsform ist das Befestigungsmittel elastisch im Messkopfkörper angeordnet. Dadurch kann die selbststabilisierende Position des Messkopfes aufliegend auf dem Rohr auch bei Unebenheiten des Rohres während des Verschiebens des Messkopfes über das Rohr vereinfacht gehalten werden. Damit kann eine noch schnellere und zuverlässigere Detektion der Stopfen für eine nachfolgende Entfernung erreicht werden.

In einer bevorzugten Ausführungsform umfasst das Befestigungsmittel zur elastischen Anordnung im Messkopfkörper eine Feder. Federn können eine für die jeweilige Anwendung ideal einstellbare Kraft bereitstellen, mit der dem Messkopf auf das Rohr gedrückt werden muss, damit die selbststabilisierende Position des Messkopfes aufliegend auf dem Rohr auch bei Unebenheiten des Rohres während des Verschiebens des Messkopfes über das Rohr vereinfacht gehalten werden. Vorzugsweise ist die Feder dabei senkrecht zu der Drehachse ausgerichtet. Damit wird eine über die Auflagefläche konstante Kraft zur Auflage bereitgestellt, wodurch eine zuverlässigere Auflage der Kontaktelemente erreicht wird. In einer weiteren Ausführungsform besitzen die Federn der Befestigungsmittel jeweils eine Federachse, die für benachbarte Kontaktelemente parallel ausgerichtet ist. Damit wird die selbststabilisierende Auflageposition weiter stabilisiert, da sich die Aufdrückkraft gleichmäßig auf die beiden Kontaktelemente verteilt. In einer bevorzugten Ausführungsform fallen dabei die Federachsen zusammen. Dadurch ist die Kraftverteilung symmetrisch zwischen den Kontaktelementen, was die Handhabung und die stabilisierende Auflageposition weiter verbessert. Damit kann eine noch schnellere und zuverlässigere Detektion der Stopfen für eine nachfolgende Entfernung erreicht werden.

Ein solcher Näherungsschalter (auch Näherungsinitiator oder Annäherungsschalter genannt) ist ein Sensor, der auf Annäherung, das heißt ohne direkten Kontakt, berührungsfrei reagiert. Näherungsschalter werden bei technischen Prozessen unter anderem zur Positionserkennung von Werkstücken und Werkzeugen, in diesem Fall Stopfen in einem Rohrsystem, eingesetzt. In einer Ausführungsform des Näherungsschalters sind die Sensoren und Schalter in dem Näherungsschalter vereinigt. Der hier verwendete Näherungsschalter ist ein magnetischer Näherungsschalter wie beispielsweise ein sogenannter Reedschalter oder Reedkontakt oder ein Hallsensor. Diese Sensoren reagieren auf ein Magnetfeld und erzeugen ein entsprechendes Signal in Gegenwart eines Magnetfeldes. Näherungsschalter-Bauteile sind beispielsweise als flache streifenförmige Quader mit Breiten und Höhen im Millimeterbereich und Längen von wenigen Millimetern bis zu mehreren Zentimetern erhältlich.

Ein Reed-Relais bezeichnet dabei ein Relais zum Schalten eines Stromkreises, welches mit einem Reedschalter arbeitet. Reed-Schaltkontakte sind Kontaktzungen, die zugleich die Kontaktfeder und den Magnetanker bilden. Die Kontaktzungen werden aus edelmetallbeschichtetem ferromagnetischem Material (zum Beispiel Weicheisen) hergestellt. Die Kontaktbetätigung erfolgt durch das durch die Rohrwand des Rohres hindurchtretende Magnetfeld, das von einem in der Nähe befindlichen Stopfen über den im Stopfen befindlichen Dauermagneten oder einer im Stopfen befindlichen betriebenen Elektromagneten elektrisch erzeugt wird. Durch das Magnetfeld ziehen sich die beiden Kontaktzungen an und schließen somit die Schaltung. Sobald das Magnetfeld abfällt oder eine bestimmte Feldstärke im Relais unterschritten wird, öffnet sich der Kontakt aufgrund der Federwirkung wieder. Wird ein Hall-Sensor von einem elektrischen Strom durchflossen und in ein senkrecht dazu verlaufendes Magnetfeld gebracht, liefert er eine elektrische Spannung, die proportional zum Produkt aus magnetischer Feldstärke und Strom ist (Hall-Effekt). Ein Hall-Sensor liefert auch dann ein Signal, wenn das Magnetfeld, in dem er sich befindet, konstant ist, wie hier der Fall ist. Der Fachmann kann im Rahmen der vorliegenden Erfindung die zu verwendenden Näherungsschalter geeignet wählen.

In einer Ausführungsform ragen der oder die Näherungsschalter aus der Kontaktfläche heraus. Dadurch wird sichergestellt, dass sich der oder die Näherungsschalter im direkten Kontakt zur Oberfläche des Rohres befinden. Allerdings ist die Auflage auf das Rohr instabil. In einer bevorzugten Ausführungsform ragt eine äußere Oberfläche des Näherungsschalters nicht aus der Kontaktfläche heraus. Als äußere Oberfläche des Näherungsschalters wird die Oberfläche des Näherungsschalters bezeichnet, die der äußeren Oberfläche des Rohres in der Auflageposition zugewandt ist. Damit lässt sich eine sehr gut selbststabilisierende Auflageposition erreichen. In einer weiter bevorzugten Ausführungsform liegt die äußere Oberfläche des Näherungsschalters bündig in der Ebene der Kontaktfläche. Damit ist neben der optimalen selbststabilisierenden Auflageposition der Abstand zur äußeren Oberfläche des Rohrs gleich Null und damit kann am sichersten das magnetische Feld des Stopfens detektiert werden. Damit kann eine noch schnellere und zuverlässigere Detektion der Stopfen für eine nachfolgende Entfernung erreicht werden.

In einer Ausführungsform umfasst das Kontaktelement mindestens einen weiteren Näherungsschalter, angeordnet in der Kontaktfläche, vorzugsweise mit einem dritten Abstand zu dem ersten Näherungsschalter, wobei jeder der Näherungsschalter unabhängig voneinander zur Detektion des durch den Stopfen erzeugten magnetischen Feldes vorgesehen ist. Damit wird die Redundanz für die Detektion erhöht, und das mobile Gerät bleibt auch betriebsbereit, wenn einer der Näherungsschalter defekt sein sollte.

Der Messkopf ist der Träger der Näherungsschalter und dient zudem als Auflage auf die Außenseite des zu untersuchenden Rohrs. Die Form des Kontaktelements kann vom Fachmann geeignet gewählt werden, wobei die Kontaktfläche für eine Auflage auf der Außenseite des Rohrs vorgesehen ist und so beschaffen ist, dass sie die Oberfläche des Rohres nicht beschädigt. Vorzugsweise ist zumindest die Kontaktfläche aus einem glatten und weichen Material beschaffen, das allerdings einen geringen Reibungskoeffizienten für gängige Rohrmaterialien hat. Beispielsweise ist der Messkopf zumindest zum überwiegenden Teil aus Kunststoff gefertigt. Die Näherungsschalter sind mit entsprechenden elektrischen Verbindungen über den Messkopf mit der Signaleinheit verbunden, damit diese ein Lokalisierungssignal für den Bediener des mobilen Geräts aussenden kann, sobald durch den oder die Näherungsschalter ein Magnetfeld detektiert wurde. Als Beispiel ist der Messkopf an einem Ende eines Stabes montiert und kann manuell mithilfe des Stabes über die Außenseite des Rohres bewegt werden. Die Montage des Messkopfes ist vorzugsweise so ausgestaltet, dass der Messkopf reversibel auf dem Stab montiert ist und gegen andere Messköpfe ausgetauscht werden kann. Die reversible Montage wird beispielsweise durch entsprechende Steckkontakte verwirklicht. Durch die Austauschbarkeit können besonders geeignete Messköpfe, die auf die entsprechenden Rohrformen (unterschiedliche minimale Rohrdurchmesser) angepasst sind, für die Untersuchung der jeweiligen Rohre verwendet werden. In dieser Ausführungsform eines reversibel montierten Messkopfes betrifft die Erfindung auch den erfindungsgemäßen Messkopf selbst, da dieser als reversibel montierte Komponente des mobilen Geräts auch separat vom mobilen Gerät vertrieben werden kann.

Die elektrischen Leitungen werden durch den Stab hindurch zu einer Signaleinheit geführt, die mit den Stab über eine starre oder eine flexible Verbindung (Verbindungskabel) verbunden ist. Das Lokalisierungssignal kann jedes Signal bezeichnen, das geeignet ist, den Bediener des mobilen Geräts auf die Detektion eines Magnetfelds aufmerksam zu machen, beispielsweise akustisch, optische oder taktile Signale. Die Ausgestaltung des Lokalisierungssignals und die Art und Anzahl der Mittel, mit denen das Lokalisierungssignal ausgesendet wird, kann vom Fachmann im Rahmen der vorliegenden Erfindung geeignet gewählt werden.

In einer weiteren Ausführungsform umfasst das mobile Gerät mindestens eine mit dem Messkopf und einer Signaleinheit verbundene Auswerteeinheit, wobei die Signaleinheit des mobilen Gerätes mittels eines akustischen Mittels und/oder eines optischen Mittels zum Aussenden eines entsprechenden akustischen und/oder optischen Lokalisierungssignals als Reaktion auf die Detektion des durch den Stopfen erzeugten magnetischen Feldes vorgesehen ist. Akustische Lokalisierungssignale sind vorteilhaft, da der Bediener des mobilen Geräts in der Regel auf den Messkopf und das zu untersuchende Rohr schaut und daher am besten akustisch auf das detektierte Magnetfeld aufmerksam gemacht wird. Das zusätzliche optische Signal kann gerade in einem dunklen Arbeitsraum auch ohne direkte Sicht des Bedieners auf die entsprechenden Mittel das akustische Signal unterstützen, gerade auch in Bereichen mit einem erhöhten Lärmpegel. Damit erhöht sich die Redundanz des Lokalisierungssignals. Damit kann eine noch schnellere und zuverlässigere Detektion der Stopfen für eine nachfolgende Entfernung erreicht werden.

In einer weiteren Ausführungsform umfasst die Signaleinheit pro Näherungsschalter ein separates optisches Mittel, das unabhängig von den anderen Näherungsschaltern nach Detektion des durch den Stopfen erzeugten magnetischen Feldes zum Aussenden des akustischen und/oder optischen Lokalisierungssignals vorgesehen ist. Dadurch kann vom Bediener überprüft werden, durch welche der Näherungsschalter die Aussendung des Lokalisierungssignals verursacht wurden. Damit kann das Magnetfeld des Stopfens noch ortsgenauer detektiert werden. Geeignete optische Mittel sind beispielsweise Leuchtdioden. Damit kann eine noch schnellere und zuverlässigere Detektion der Stopfen für eine nachfolgende Entfernung erreicht werden.

In einer weiteren Ausführungsform besitzt der Messkopf eine Ausdehnung senkrecht zu den Kontaktflächen, die größer ist als die maximale Entfernung, in der das Magnetfeld des Stopfens durch die Näherungsschalter noch zuverlässig detektiert werden kann. Dadurch wird verhindert, dass der Messkopf mit der oberen Seite (Seite des Messkopfes, die der ersten Seite gegenüberliegt) so nahe an einem parallelen Rohr vorbeigeführt wird, dass die Näherungsschalter, die auf einem ersten Rohr aufliegen, dennoch das Magnetfeld eines Stopfens in dem parallelen Rohr detektieren und die Signaleinheit dies anzeigt. Da aber der Messkopf auf dem ersten Rohr entlang geführt wurde, würde das Lokalisierungssignal dem ersten Rohr zugeordnet und dieses an der detektierten Stelle abgetrennt werden, obwohl sich der Stopfen, der das detektierte Magnetfeld aussendet, nicht im ersten Rohr, sondern in dem dazu parallelen Rohr befindet. Diese Art von Fehlinterpretationen wird vermieden, wenn der Messkopf über seine Dicke selber eine zu dichte Annäherung der Näherungsschalter an ein gegenüberliegendes (paralleles) Rohr verhindert. Haben die Näherungsschalter dadurch einen hinreichend großen Abstand zum gegenüberliegenden parallelen Rohr, können sie ein dortiges Magnetfeld im nicht untersuchten Rohr nicht detektieren, sondern können nur ein vorhandenes Magnetfeld im der ersten Seite zugewandten untersuchten Rohr detektieren. Eine solche Ausdehnung des Messkopfes sollte mehr als 2 cm, vorzugsweise mehr als 3 cm betragen.

Das erfindungsgemäße mobile Gerät bildet zusammen mit den magnetischen Stopfen ein Detektionssystem, mit dem in einem Rohrsystem fälschlicherweise verbliebenen Stopfen mit geringem Aufwand möglichst schnell und zuverlässig für eine nachfolgende Entfernung lokalisieren werden können.

Die Erfindung betrifft des Weiteren ein Verfahren zur Lokalisierung von zumindest teilweise magnetischen Stopfen mit unbekannter Position in einem Rohrsystem mittels eines erfindungsgemäßen mobilen Geräts mit einen Messkopf, umfassend einen Messkopfkörper und mindestens zwei Kontaktelemente mit jeweils einer Kontaktfläche, wobei jedes der Kontaktelemente mittels geeigneter Befestigungsmittel so drehbar am Messkopfkörper gehaltert ist, dass eine kontaktierende Auflage der Kontaktflächen auf einer äußeren Oberfläche des Rohrs unabhängig vom Rohrdurchmesser ermöglicht wird, sofern der Rohrdurchmesser größer ist als ein erster Abstand zwischen den Kontaktflächen in einer Position der Kontaktelemente, wo die Kontaktflächen der benachbarten Kontaktelemente gegenüberliegend zueinander ausgerichtet sind, und mindestens eine der Kontaktflächen, vorzugsweise alle Kontaktflächen, mindestens einen Näherungsschalter zur Detektion des durch den Stopfen erzeugte magnetische Feld umfasst, umfassend die Schritte
- Auflegen der mindestens zwei Kontaktelemente mit den Kontaktflächen auf die äußere Oberfläche des Rohres des Rohrsystems,
- weiteres Ausüben einer Kraft auf den Messkopfes in Richtung des Rohres zum Ausrichten der Kontaktflächen mittels Drehen der Kontaktelemente, so dass eine selbststabilisierende Auflageposition der Kontaktflächen auf dem Rohr erreicht wird und der oder die Näherungsschalter in einen minimalen Abstand zu der äußeren Oberfläche des Rohres gebracht werden,
- Bewegen des Messkopfes entlang einer Längsrichtung des Rohrs, und
- Bestimmen der Position des zumindest teilweise magnetischen Stopfens mittels Detektion seines lokalen magnetischen Feldes mit dem Näherungsschalter.

Mit diesem erfindungsgemäßen Verfahren können in einem Rohrsystem fälschlicherweise verbliebene Stopfen mit geringem Aufwand möglichst schnell und zuverlässig für eine nachfolgende Entfernung lokalisieren werden.

In einer Ausführungsform des Verfahrens, wobei die Befestigungsmittel zur elastischen Anordnung im Messkopfkörper jeweils eine Feder umfassen, umfasst das Verfahren den weiteren Schritt des Erhöhens der Kraft bei der Ausrichtung der Kontaktflächen, bis die Federn in der selbststabilisierende Auflageposition geeignet gestaucht sind, vorzugsweise um mindestens 20 % der verfügbaren Federweges.

In einer Ausführungsform des Verfahrens, wobei das mobile Gerät mindestens eine mit dem Messkopf und einer Signaleinheit verbundene Auswerteeinheit umfasst, umfasst das Verfahren die weiteren Schritte des
- Übermittelns eines Detektionssignals von der Auswerteeinheit an die Signaleinheit als Reaktion auf die Detektion des durch den Stopfen erzeugten magnetischen Feldes, und des
- Aussendens eines akustischen und/oder optischen Lokalisierungssignals durch entsprechende akustische und/oder optische Mittel der Signaleinheit. In einer weiteren Ausführungsform des Verfahrens, wobei das mobile Gerät mehrere Näherungsschalter und die Signaleinheit jeweils ein separates optisches Mittel pro Näherungsschalter umfasst, umfasst das Verfahren den Schritt des
- Aussendens des akustischen und/oder optischen Lokalisierungssignals separat pro Näherungsschalter nach Detektion des durch den Stopfen erzeugten magnetischen Feldes durch den jeweiligen Näherungssensor.

In einer weiteren Ausführungsform umfasst das Verfahren den weiteren Schritt des Aufbringens einer Markierung auf der Außenseite des Rohres, wo die Signaleinheit des mobilen Geräts das Lokalisierungssignal ausgesendet hat. Nicht-ferromagnetische Bereiche eines Rohres bestehen beispielsweise aus Aluminimum, Plastik oder Edelstahl. Nach Aufbringen einer Markierung kann gegebenenfalls sofort nach weiteren Stopfen im Rohrsystem gesucht werden. Zur Entfernung des gefundenen Stopfens wird zu einem späteren Zeitpunkt der Rohrabschnitt um den Stopfen herum abgetrennt, entfernt und ein entsprechender Rohrabschnitt zum erneuten Verbinden der dadurch entstehenden offenen Rohrenden eingesetzt. Die Schweißnahtvorbereitung für den neu einzusetzenden Rohrabschnitt erfolgt wie bereits voranstehend für Rohre allgemein beschrieben. Die Stopfen müssen auch hier nach erfolgter Schweißnahtvorbereitung wieder aus den Rohrenden entfernt werden.

### Kurze Beschreibung der Abbildungen

Diese und andere Aspekte der Erfindung werden im Detail in den Abbildungen wie folgt gezeigt.
- Fig.1:: eine Ausführungsform eines zu detektierenden Stopfens in Seitenansicht der Klemmposition in einem Rohr;
- Fig.2:: eine weitere Ausführungsform eines zu detektierenden Stopfens in Seitenansicht der Klemmposition in einem Rohr;
- Fig.3:: Ausführungsformen eines Messkopfes des erfindungsgemäßen mobilen Geräts in (a) Ansicht von vorne, (b1) + (b2) Seitenansicht verschiedener Ausführungsformen dieses Messkopfes, und (c) Vorderansicht des Messkopfes mit zueinander ausgerichteten Kontaktelementen;
- Fig.4:: Auflageposition des Messkopfes des erfindungsgemäßen mobilen Geräts auf (a) einem Rohr mit kleinem Durchmesser, und (b) auf einem Rohr mit großen Durchmesser;
- Fig.5:: eine Ausführungsform des erfindungsgemäßen mobilen Geräts;
- Fig.6:: eine Ausführungsform des erfindungsgemäßen Verfahrens mit Verschieben des Messkopfes auf dem Rohr zur Detektion der Stopfen.

### Detaillierte Beschreibung der Ausführungsbeispiele

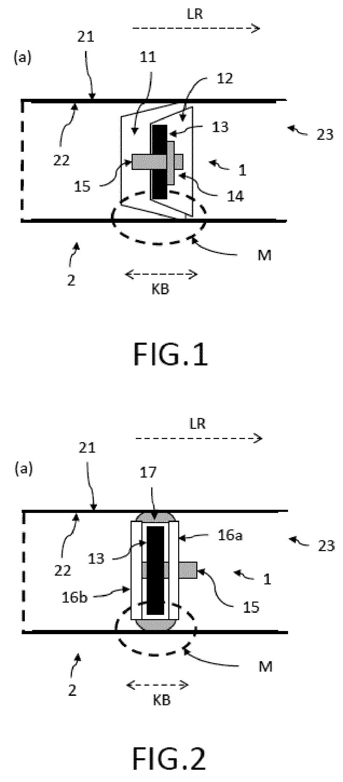

Fig. 1 zeigt einen mit dem erfindungsgemäßen mobilen Gerät zu detektierenden Stopfen 1 in Seitenansicht der Klemmposition in einem Rohr 2. Der Stopfen 1 besitzt in dieser Ausführungsform eine konische Form zum reversiblen inneren Verschließen von zylindrischen Rohren 2. Der Stopfen 1 umfasst einen Magnet 13 (beispielsweise ein Permanentmagnet), dessen Magnetfeld M ausreichend stark ist, um ein detektierbares Magnetfeld M zumindest an der äußeren Oberfläche 21 (Außenseite) des Rohres 2 aus einem nicht-ferromagnetischen Material zu erzeugen. Der Stopfen in Fig.1 umfasst eine konische in einem inneren Bereich hohle Außenform 11 und eine ebenfalls konisch geformte Innenform 12, die ebenfalls innen hohl sein kann. Drückt man diese Innenform 12 in die konische Außenform 11 hinein (beispielsweise mittels einer in Außen- und Innenform 11, 12 angeordneten Vorrichtung 15 als Gewindeloch, in die eine Gewindestange oder Flügelmutter eingeschraubt wird) wird der Umfang der konischen Außenform 11 durch die auf die Außenform 11 drückende Innerform 12 vergrößert und der Stopfen 1 im Rohrinneren 22 verklemmt. Für die Schweißnahtvorbereitung zum Zusammenfügen von zwei Rohren 2, beispielsweise Aluminiumrohren, an ihren jeweiligen Rohrenden 23, wird der Stopfen 1 vorher in das Rohr 2 in eine geeignete Position in der Nähe der Rohrendes 23 hineingeschoben. Die Position im Rohr 2 soll einerseits genügend Arbeitsraum für die Schweißnahtvorbereitung am Rohrende 23 zur Verfügung stellen und andererseits das Rohr möglichst kurz vor dem Rohrende 23 vor Verschmutzung durch die Schweißnahtvorbereitung schützen. Nach Beendigung der Schweißnahtvorbereitung kann das Rohrende 23 und die Innenform 12 des Stopfens gereinigt und der Stopfen 1 anschließend entfernt werden. Durch die Vorrichtung 15 kann beispielsweise der Magnet 13 ausgeführt als Scheibe mit einem Loch im Bereich der Vorrichtung 15 im Stopfen 1 gehaltert werden. Das Loch in der Mitte des Magneten 13 zur Halterung des Magneten an der Vorrichtung 15 ist in der Scheibe zentriert angeordnet, so dass das lokale Magnetfeld des Stopfens an der Position des Stopfens umlaufend aus der äußeren Oberfläche des Rohr heraustritt. Die Dimensionen und die Magnetfeldstärke des Magneten 13 können gegebenenfalls geeignet angepasst werden.

Fig. 2 zeigt eine weitere Ausführungsform eines zu detektierenden Stopfens 1 in Seitenansicht der Klemmposition in einem Rohr 2. Dieser Stopfen entwickelt seine Klemmwirkung an der Innenseite 22 des Rohres 2 nach einem anderen Prinzip als bei dem Stopfen in Fig.1. Der erfindungsgemäße Stopfen 1 umfasst zwei Platten 16a, 16b, die über ein weiches komprimierbares Material 17, beispielsweise Gummi, verbunden sind. Dieses Material 17 bildet eine umlaufende Fläche zwischen den Platten 16a, 16b. Drückt man die Platten 16a, 16b gegeneinander, wird die umlaufende Fläche 17 nach außen gewölbt, so dass sich der Durchmesser des Stopfens 1 vergrößert und so an der Innenseite 22 des Rohres 2 in einem Klemmbereich KB festklemmt. Das Gegeneinanderdrücken (oder Zusammendrücken) der Platten kann ebenfalls durch eine Schraubverbindung mittels Gewindestange oder Flügelmutter erreicht werden. Beispielsweise ist eine Vorrichtung 15 mit Außengewinde fest mit der einen Platte 16b verbunden und durch die andere Platte 16a hindurchgeführt, so dass die Vorrichtung 15 über die Platte 16a auch in Zustand des Stopfens 1 ohne Klemmwirkung herausragt. Schraubt man nun eine Flügelmutter (nicht explizit in Fig. 2 gezeigt) auf das Außengewinde der Vorrichtung 15, kann man mithilfe dieser Flügelmutter die Platten 16a, 16b gegeneinander zur Erzielung einer Klemmwirkung über das dadurch sich hinauswölbende Material 17 drücken. Die Bauart des Stopfens 1 bedingt einen hohlen Innenbereich zwischen den Platten 16a, 16b auch bei Ausübung einer Klemmwirkung auf die Innenseite 22 eines Rohres 2. In diesen Innenbereich zwischen den Platten 16a, 16b kann ein ähnlich wie in Fig.1 geformter Magnet mit einer Scheibenform mit einem zentralen Loch mit Durchmesser geeignet zum Durchführen der Vorrichtung 15 angeordnet werden. Bei einem solchen Stopfen 1 geeignet für 4-Zoll Rohre (DN 100) hat der scheibenförmige Magnet 13 beispielsweise einen Durchmesser von 72 mm, eine Dicke von 15 mm und ein zentrales Loch in der Scheibe mit einem Durchmesser von beispielsweise 32 mm.

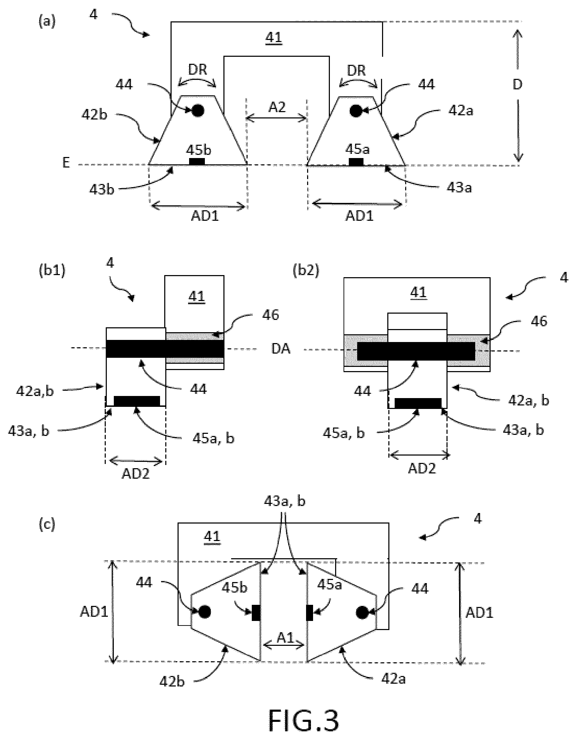

Fig. 3 zeigt Ausführungsformen eines Messkopfes des erfindungsgemäßen mobilen Geräts in (a) Ansicht von vorne, (b1) + (b2) Seitenansicht verschiedener Ausführungsformen dieses Messkopfes, und (c) Vorderansicht des Messkopfes mit zueinander ausgerichteten Kontaktelementen. In der Ansicht von vorne (Fig.3a) umfasst der Messkopf 4 einen U-förmigen Messkopfkörper 41 und zwei daran befestigte Kontaktelemente 42a, 42b mit jeweils einer Kontaktfläche 43a, 43b vorgesehen zur kontaktierenden Auflage auf eine äußere Oberfläche 21 des Rohrs 2 des Rohrsystems, wobei jedes der Kontaktelemente 42a, 42b mittels der Befestigungsmittel 44 drehbar DR (mit Doppelpfeil schematisch dargestellt) am Messkopfkörper 41 gehaltert ist. Die Befestigungsmittel 44 (hier schematisch als schwarze Kreise dargestellt) sind hier so ausgestaltet, dass die Kontaktelemente 42a, 42b entlang einer Drehachse DA drehbar DR sind, wobei die resultierenden Drehachsen DA für die einzelnen Kontaktelemente 42a, 42b parallel zueinander ausgerichtet sind. Die Kontaktelemente 42a, 42b umfassen jeweils eine Kontaktflächen 43a, 43b, in denen jeweils ein Näherungsschalter 45a, 45b in einer Vertiefung der Kontaktfläche zur Detektion eines durch den Stopfen 1 erzeugten lokalen magnetischen Feldes M angeordnet ist. Die äußeren Oberflächen der Näherungsschalter 45a, 45b ragen hier nicht aus der Kontaktfläche 43a, 43b heraus, sondern liegen bündig in der Ebene der Kontaktfläche 43a, 43b, so dass die äußere Oberfläche des Näherungsschalter 45a, 45b mit der übrigen Kotaktfläche 43a, 43b eine gemeinsame ebene Oberfläche bildet. Die Kontaktflächen 43a, 43b der Kontaktelemente 42a, 42b besitzen hierbei senkrecht zur Drehachse DA der Kontaktelemente 42a, 42b eine erste Ausdehnung AD1, die mindestens einem zweiten Abstand A2 der Kontaktflächen 43a. 43b der benachbarten Kontaktelemente 42a, 42b zueinander senkrecht zur Drehachse DA bei einer parallelen Ausrichtung der Kontaktflächen 43a, 43b der benachbarten Kontaktelemente 42a, 42b in einer Ebene E entspricht. Die Drehachse DA tritt hier senkrecht aus der Abbildung heraus (nicht explizit in Fig.3a gezeigt, siehe dazu Fig.3b1 oder Fig.3b2). Die Kontaktelemente 42a, 42b sind in dieser Ausführungsform in Richtung der Kontaktflächen 43a, 43b konisch oder trapezförmig ausgeformt, so dass der Schwerpunkt der Kontaktelemente 42a, 42b zwischen Befestigungsmittel 44 und Kontaktfläche 43a, 43b liegt. Somit sind die Kontaktelemente 42a, 42b bei einer Haltung des Messkopfes mit dem Kontaktelementen 42a, 42b nach unten in Richtung der Gravitationskraft in einer definierten Position mit den Kontaktflächen 43a, 43b nach unten ausgerichtet. Die Formen der Kontaktelemente 42a, 42b ist hier lediglich beispielhaft und können in anderen Ausführungsformen zur Erzielung des gleichen Effekts auch geeignet anders ausgestaltet sein. Der Messkopf 4 besitzt in dieser Ausführungsform außerdem eine Ausdehnung D senkrecht zu den Kontaktflächen 43a, 43b, die größer sein sollte als die maximale Entfernung, in der das Magnetfeld M des Stopfens 1 durch die Näherungsschalter 45a, 45b noch zuverlässig detektiert werden kann. Mit einem solchen Messkopf lassen sich Störsignale von Stopfen aus anderen Rohren vermeiden.

Fig. 3b1 und Fig. 3b2 zeigen unterschiedliche Seitenansichten verschiedener Ausführungsformen dieses Messkopfes 4, wobei in Fig. 3b1 die Kontaktelemente einseitig über drehbare Stifte 44 als Befestigungsmittel 44 mit dem Messkopfkörper 41 verbunden (befestigt) sind. Fig. 3b2 zeigt eine alternative Halterung der Kontaktelemente 42a, 42b, wo der Messkopfkörper auch in Richtung der Drehachse der Stifte 44 U-förmig ausgestaltet ist, so dass die Stifte 44 beidseitig von den Kontaktelementen 42a, 42b in dem Messkopfkörper gehaltert sind. Diese Ausführungsform stellt eine robustere Halterung gegenüber der in Fig. 3b1 dar. Die Kontaktfläche 43a, 43b hat dabei eine zweite Ausdehnung AD2 parallel zu der Drehachse DA, die bei einer Ausführungsform der Kontaktelemente 42a, 42b größer als die erste Ausdehnung AD1 senkrecht zur Drehachse DA ist. In den hier gezeigten Ausführungsformen ist das Befestigungsmittel 44 elastisch im Messkopfkörper 41 angeordnet, indem um den Stift 44 als Befestigungsmittel 44 ein elastisches Material 46 (grau unterlegt) als Teil des Messkopfkörpers 41 angeordnet ist.

In Fig. 3b zeigt die Vorderansicht des Messkopfes 4 mit zueinander ausgerichteten Kontaktelementen 42a, 42b. Hier bezeichnet der Abstand A1 den minimalsten Abstand zwischen den Kontaktflächen 43a, 43b benachbarter Kontaktelemente 42a, 42b zueinander in einer Position der Kontaktelemente 42a, 42b, wo die Kontaktflächen 43a, 43b dieser Kontaktelemente 42a, 42b zueinander ausgerichtet sind. Da in dieser Ausführungsform die Kontaktflächen 43a, 43b planar sind, sind die Kontaktflächen 43a, 43b für einen minimalen Abstand A1 zueinander parallel gegenüberliegend ausgerichtet. Sofern der Rohrdurchmesser größer ist als der erste Abstand A1 ist, kann der Messkopf 4 für die Lokalisierung von Stopfen 1 in diesen Rohren 2 verwendet werden.

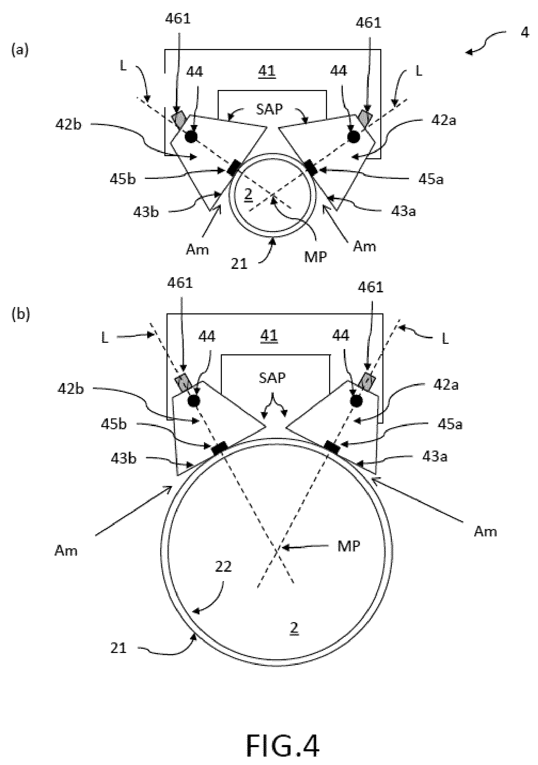

Fig. 4 zeigt beispielhaft eine Auflageposition des Messkopfes 4 des erfindungsgemäßen mobilen Geräts 3 auf (a) einem Rohr 2 mit kleinem Durchmesser, und (b) auf einem Rohr 2 mit großen Durchmesser. Hierbei ist der Näherungsschalter 45a, 45b in der gezeigten Ausführungsform des Messkopfes 4 in der Kontaktfläche 43a, 43b des Kontaktelementes 42a, 42b an einer Position angeordnet, bei der nach selbststabilisierender Auflage des Kontaktelements 42a, 42b auf der Oberfläche 21 des Rohres 2 die Position des Näherungsschalters 45a, 45b von einer gedachten Linie L (gestrichelt dargestellt) vom Rohrmittelpunkt MP zum Befestigungsmittel 44 geschnitten wird. Diese Bedingung ist dabei unabhängig vom Rohrdurchmesser erfüllt. Für die Erreichung einer selbststabilisierenden Auslageposition SAP sind die Kontaktelemente 42a, 42b entsprechend ausgeformt. In dieser Ausführungsform sind dafür die Kontaktflächen planar geformt und die Kontaktelemente identisch dimensioniert und symmetrisch am Messkopfkörper 41 mittels Befestigungsmittel 44 befestigt. Dabei sind die Befestigungsmittel 44 gemäß Fig.3 ausgestaltet, so dass durch die kontaktierende Auflage der Kontaktflächen 43a, 43b des oder der Näherungsschalter 45a, 45b in einen minimalen Abstand Am zu der Oberfläche 21 des Rohres 2 unabhängig vom Rohrdurchmesser gebracht werden. Die hier gezeigten Befestigungsmittel 44 umfassen zur elastischen Anordnung der Kontaktelemente 42a, 42b im Messkopfkörper 41 jeweils eine Feder 461, wobei die Feder 461 dabei senkrecht zu der Drehachse DA ausgerichtet ist. In hier nicht gezeigten Ausführungsformen können die Federn 461 der Befestigungsmittel 44 jeweils eine Federachse besitzen, die für benachbarte Kontaktelemente 42a, 42b parallel ausgerichtet ist, vorzugsweise fallen die Federachsen zusammen.

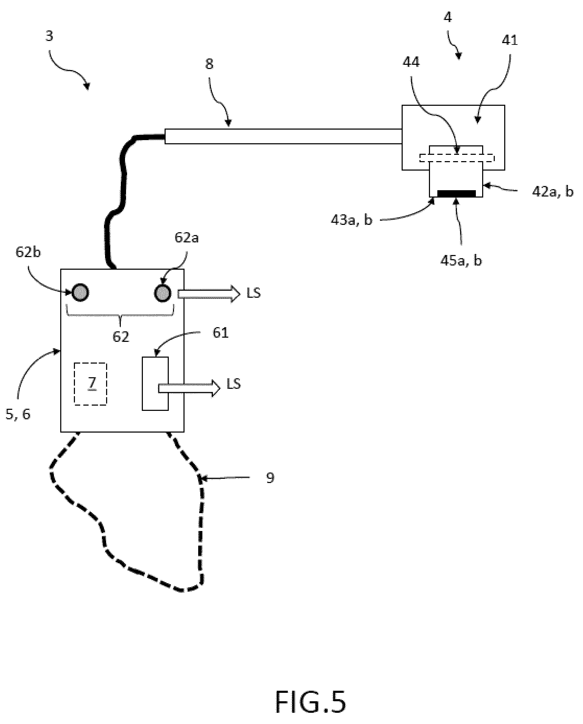

Fig. 5 zeigt eine Ausführungsform eines mobilen Geräts 3 geeignet zur Lokalisierung von Stopfen 1 in einem Rohr 2. Das mobile Gerät 3 umfasst einen Messkopf 4 zur Detektion des durch den Stopfen 1 erzeugte magnetische Feld M mit den Kontaktelementen 42a, 42b in Seitenansicht zur Auflage auf ein zu untersuchendes Rohr 2 eines Rohrsystems, in dem sich der zu suchende Stopfen 1 befindet. Der Messkopf 4 ist auf einem Stab 8 angeordnet, mit dem der Messkopf 4 über die äußere Oberfläche 21 (Außenseite) des Rohres 2 bewegt werden kann. Der Messkopf 4 ist mit einer Auswerteeinheit 5 und einer Signaleinheit 6 über ein flexibles Kabel verbunden. In anderen Ausführungsformen kann die Verbindung zwischen Messkopf 4 und Auswerteeinheit 5 beziehungsweise Signaleinheit 6 auch anders ausgeführt sein, beispielsweise drahtlos über Funk- oder RFID-Technik. Die Signaleinheit 6 sendet ein Lokalisierungssignal LS als Reaktion auf die Detektion eines magnetischen Feldes M aus, das den Stopfen 1 dadurch im Rohr 2 lokalisiert. Die Kontaktelemente 42a, 42b können in manchen Ausführungsformen einen oder mehrere Näherungsschalter 45a, 45b (als längliches schwarzes Rechteck dargestellt) zur Detektion des Magnetfeldes M umfassen. Geeignet Näherungsschalter 45a, 45b sind beispielsweise Reed-Kontakt oder Reed-Schalter. Das mobile Gerät 3 kann eine reversible Halterung des Messkopfes 4 umfassen, beispielsweise eine Steckkontaktverbindung oder eine Bajonettverbindung, so dass der Messkopf 4 leicht und schnell gegen einen anderen Messkopf 4 mit eventuell anders geformten oder dimensionierten Kontaktelementen 42a, 42b, die besser auf das zu untersuchende Rohr 2 angepasst sind, ausgetauscht werden. Die in dieser Ausführungsform gezeigten Näherungsschalter 45a, 45b ragen nicht aus den Kontaktflächen 43a, 43b heraus. Das Material des Messkopfes 4 kann beispielsweise Plastik sein. Die Signaleinheit 6 umfasst in dieser Ausführungsform akustische Mittel 61, beispielsweise einen Lautsprecher, und optische Mittel 62, beispielsweise grüne LEDs, zur Aussendung eines kombinierten (simultanen) akustischen und optischen Lokalisierungssignals LS, wobei die optischen Mittel 62a, 62b separat ausgestaltet und den zwei Näherungsschaltern 45a, 45b separat zugeordnet sind, um unabhängig voneinander nach Detektion des durch den Stopfen 1 erzeugte magnetische Feld M das optische Lokalisierungssignal LS auszusenden. Die für den Betrieb der Komponenten des mobilen Geräts benötigte Stromversorgung kann beispielsweise über eine Batterie 7 (beispielsweise eine 9V Batterie) in der Signaleinheit 6 oder der Auswerteeinheit 5 bereitgestellt werden. Um einen sicheren mobilen Betrieb des mobilen Geräts 3 zu gewährleisten, kann die Signaleinheit 6 mittels einer flexiblen Halterung 9 beispielsweise um den Hals eines Bedieners gehängt werden.

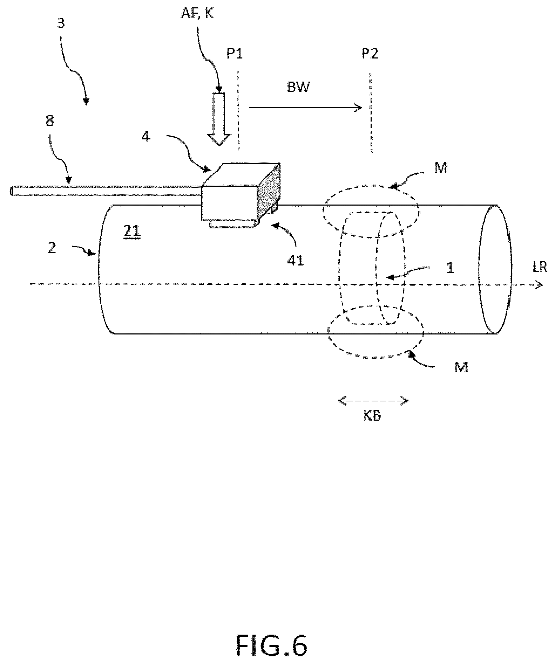

Fig. 6 zeigt, wie die Lokalisierung eines erfindungsgemäßen Stopfens 1 in einem Rohr 2 mittels des erfindungsgemäßen mobilen Geräts 3 vorgenommen werden kann. Der Messkopf 4 des mobilen Geräts 3 wird dabei zur Lokalisierung von Stopfen 1 mit den Kontaktelemente 42a, 42b in einer selbststabilisierenden Auflageposition entlang einer Bewegungsrichtung BW entlang der Längsrichtung LR des Rohrs 2 bewegt. Die Magneten in den Stopfen 1 sind dabei so dimensioniert, dass diese Magneten ein magnetisches Feld M an der Außenseite 21 des Rohres erzeugen, das im Wesentlichen auf den Klemmbereich KB des Stopfens begrenzt ist. Somit entspricht der Ort des Messkopfes 4, für den ein Lokalisierungssignal LS ausgesendet wird, der genauen Position des Stopfens im Rohr 2. Befindet sich der Messkopf 4 an einer Position P1 auf der Außenseite 22 des Rohres 2, so ist das magnetische Feld M zu schwach (bzw. nicht vorhanden), um detektiert zu werden. Entsprechend wird an der Position P1 kein Lokalisierungssignal LS durch die Signaleinheit 6 ausgesendet. Befindet sich der Messkopf 4 dagegen an der Position P2, so ist dort das magnetische Feld M (Magnetfeld) im Klemmbereich KB des Stopfens 1 stark genug, um von den Näherungsschaltern 45a, 45b detektiert werden zu können. Entsprechend wird bei der Position P2 des Messkopfes 4 ein Lokalisierungssignal LS ausgesendet und der zu suchende Stopfen 1 ist damit am Ort P2 lokalisiert. Das Verfahren zur Suche erfindungsgemäßer Stopfen 1 in einem Rohrsystem mit unbekannter Position umfasst daher nach Anschalten des mobilen Geräts 3 die Schritte (a) Auflegen AF der mindestens zwei Kontaktelemente 42a, 42b mit den Kontaktflächen 43a, 43b auf die äußere Oberfläche 21 des Rohres 2 des Rohrsystems, (b) weiteres Ausüben einer Kraft K auf den Messkopfes 4 in Richtung des Rohres 2 zum Ausrichten der Kontaktflächen 43a, 43b mittels Drehen DR der Kontaktelemente 42a, 42b, so dass eine selbststabilisierende Auflageposition der Kontaktflächen 43a, 43b auf dem Rohr 2 erreicht wird und die beiden Näherungsschalter 45a, 45b in einen minimalen Abstand Am, hier im direkten Kontakt zur Oberfläche 21 des Rohres 2, gebracht werden, (c) Bewegen des Messkopfes 4 entlang einer Längsrichtung LR des Rohrs 2, und (d) Bestimmen der Position P2 des zumindest teilweise magnetischen Stopfens 1 mittels Detektion seines lokalen magnetischen Feldes M mit den Näherungsschaltern 45a, 45b. An der Position P2 kann für die spätere Entfernung des Stopfens eine Markierung aufgebracht werden, damit unverzüglich weiter nach eventuellen zusätzlichen Stopfen gesucht werden kann und die lokalisierte Position des detektierten Stopfen leicht wiedergefunden werden kann. Im Bereich der Markierung kann dann der Bereich des Rohres 2 mit Stopfen 1 aus dem Rohrsystem entfernt und durch ein entsprechendes Rohrstück ohne Stopfen ersetzt werden. Danach ist das Rohrsystem wie gewünscht voll funktionsfähig. Das Verfahren ist auf Rohrmaterialien beschränkt, die das magnetische Feld des Stopfens nicht abschirmen, so dass es an der äußeren Seite des Rohres detektierbar ist.

Die hier gezeigten Ausführungsformen stellen nur Beispiele für die vorliegende Erfindung.

### Liste der Bezugszeichen

- 1: Stopfen
- 11: äußerer Stopfen
- 12: innerer Stopfen
- 13: Magnet im Stopfen
- 14: Haltevorrichtung für Magnet
- 15: Vorrichtung zur Erzeugung einer Klemmwirkung
- 16a: obere Klemmplatte
- 16b: untere Klemmplatte
- 17: Klemmring
- 2: nicht-ferromagnetisches Rohr
- 21: Außenseite des Rohres (äußere Oberfläche des Rohres)
- 22: Innenseite des Rohres (Rohrinnenseite)
- 23: offenes Ende des Rohres
- 3: mobiles Gerät zur Lokalisierung der erfindungsgemäßen Stopfen
- 4: Messkopf
- 41: Messkopfkörper
- 42a,b: Kontaktelemente
- 43a,b: Kontaktfläche des Kontaktelements zur Auflage auf das Rohr
- 44: Befestigungsmittel für die Kontaktelemente am Messkopfkörper
- 45a,b: (erster und zweiter) Näherungsschalter
- 46: elastisches Material
- 461: Feder
- 5: Auswerteeinheit
- 6: Signaleinheit
- 61: akustische Mittel der Signaleinheit
- 62: optische Mittel der Signaleinheit
- 62a,b: separate optische Mittel
- 63: Batterie
- 7: Stab
- 8: Halterung des mobilen Geräts

- A1: erster Abstand
- A2: zweiter Abstand
- AD1: erste Ausdehnung der Kontaktfläche senkrecht zur Drehachse
- AD2: zweite Ausdehnung der Kontaktfläche parallel zur Drehachse
- Am: minimaler Abstand
- BW: Bewegungsrichtung des Messkopfes
- DA: Drehachse der Befestigungsmittel
- DR: drehbare Befestigung der Kontaktelemente am Messkopfkörper mittels der Befestigungsmittel
- E: Ebene
- KB: Klemmbereich des Stopfens im Rohr
- L: gedachte Linie zwischen Mittelpunkt des Rohres und Befestigungsmittel
- LR: Längsrichtung der Rohres
- LS: Lokalisierungssignal
- M: Magnetfeld, magnetisches Feld
- MP: Mittelpunkt des Rohres
- P1: erste Position
- P2: zweite Position
- SAP: selbststabilisierende Auflageposition der Kontaktflächen auf der äußeren Oberfläche des Rohres

## Patentansprüche

1. Ein mobiles Gerät (3) zur Lokalisierung von zumindest teilweise magnetischen Stopfen (1) mit unbekannter Position in einem Rohrsystem mit einen Messkopf (4), umfassend einen Messkopfkörper (41) und mindestens zwei Kontaktelemente (42a, 42b) mit jeweils einer Kontaktfläche (43a, 43b), vorgesehen zur kontaktierenden Auflage auf eine äußere Oberfläche (21) des Rohrs (2) des Rohrsystems, wobei jedes der Kontaktelemente (42a, 42b) mittels geeigneter Befestigungsmittel (44) drehbar am Messkopfkörper (41) gehaltert ist und mindestens eine der Kontaktflächen (43a, 43b), vorzugsweise alle Kontaktflächen (43a, 43b), mindestens einen Näherungsschalter (45a, 45b) zur Detektion eines durch den Stopfen (1) erzeugten lokalen magnetischen Feldes (M) umfasst, wobei die Befestigungsmittel (44) so ausgestaltet sind, dass durch die kontaktierende Auflage der Kontaktflächen (43a, 43b) der oder die Näherungsschalter (45a, 45b) in einen minimalen Abstand (Am) zu der Oberfläche (21) des Rohres (2) unabhängig vom Rohrdurchmesser gebracht werden, sofern der Rohrdurchmesser größer ist als ein erster Abstand (A1) zwischen den Kontaktflächen (43a, 43b) benachbarter Kontaktelemente (42a, 42b) in einer Position der Kontaktelemente (42a, 42b), wo die Kontaktflächen (43a, 43b) dieser Kontaktelemente (42a, 42b) gegenüberliegend zueinander ausgerichtet sind, und wobei die Kontaktelemente (42a, 42b) so ausgeformt sind, dass die Kontaktelemente (42a, 42b) eine selbststabilisierende Auflageposition (SAP) der Kontaktflächen (42a, 42b) auf der Oberfläche (21) des Rohres (2) ermöglichen.

2. Das mobile Gerät (3) nach Anspruch 1,
**dadurch gekennzeichnet,**
**dass** die Befestigungsmittel (44) so ausgestaltet sind, dass die Kontaktelemente (42a, 42b) entlang einer Drehachse (DA) drehbar sind.

3. Das mobile Gerät (3) nach Anspruch 2,
**dadurch gekennzeichnet,**
**dass** die Kontaktelemente (42a, 42b) mittels der Befestigungsmittel (44) so am Messkopfkörper (41) befestigt sind, dass die resultierenden Drehachsen (DA) für die einzelnen Kontaktelemente (42a, 42b) parallel zueinander ausgerichtet sind.

4. Das mobile Gerät (3) nach Anspruch 3,
**dadurch gekennzeichnet,**
**dass** die Kontaktflächen (43a, 43b) der Kontaktelemente (42a, 42b) senkrecht zur Drehachse (DA) der Kontaktelemente (42a, 42b) eine erste Ausdehnung (AD1) besitzen, die mindestens einem zweiten Abstand (A2) der Kontaktflächen (43a. 43b) der benachbarten Kontaktelemente (42a, 42b) zueinander senkrecht zur Drehachse (DA) bei einer parallelen Ausrichtung der Kontaktflächen (43a, 43b) der benachbarten Kontaktelemente (42a, 42b) in einer Ebene (E) entspricht.

5. Das mobile Gerät (3) nach Anspruch 4,
**dadurch gekennzeichnet,**
**dass** eine zweite Ausdehnung (AD2) der Kontaktflächen (43a, 43b) der Kontaktelemente (42a, 42b) parallel zur Drehachse (DA) größer als die erste Ausdehnung (AD1) senkrecht zur Drehachse (DA) ist.

6. Das mobile Gerät (3) nach einem der voranstehenden Ansprüche,
**dadurch gekennzeichnet,**
**dass** der Näherungsschalter (45a, 45b) in der Kontaktfläche (43a, 43b) des Kontaktelementes (42a, 42b) an einer Position angeordnet ist, bei der nach selbststabilisierender Auflage des Kontaktelements (42a, 42b) auf die Oberfläche (21) des Rohres (2) die Position des Näherungsschalters (45a, 45b) von einer gedachten Linie (L) vom Rohrmittelpunkt (MP) zum Befestigungsmittel (44) geschnitten wird.

7. Das mobile Gerät (3) nach einem der voranstehenden Ansprüche,
**dadurch gekennzeichnet,**
**dass** das Befestigungsmittel (44) elastisch im Messkopfkörper (41) angeordnet ist.

8. Das mobile Gerät (3) nach einem der voranstehenden Ansprüche,
**dadurch gekennzeichnet,**
**dass** das Befestigungsmittel (44) zur elastischen Anordnung im Messkopfkörper (41) eine Feder (461) umfasst, vorzugsweise ist die Feder (461) senkrecht zu der Drehachse (DA) ausgerichtet.

9. Das mobile Gerät (3) nach Anspruch 8,
**dadurch gekennzeichnet,**
**dass** die Federn (461) der Befestigungsmittel (44) jeweils eine Federachse besitzen, die für benachbarte Kontaktelemente (42a, 42b) parallel ausgerichtet ist, vorzugsweise fallen die Federachsen zusammen.

10. Das mobile Gerät (3) nach einem der voranstehenden Ansprüche, **dadurch gekennzeichnet,**
**dass** eine äußere Oberfläche des Näherungsschalter (45a, 45b) nicht aus der Kontaktfläche (43a, 43b) herausragt, vorzugsweise liegt die äußere Oberfläche der Näherungsschalters (45a, 45b) bündig in der Ebene der Kontaktfläche (43a, 43b).

11. Das mobile Gerät (3) nach einem voranstehenden Ansprüche,
**dadurch gekennzeichnet,**
**dass** der Messkopf (4) eine Ausdehnung (D) senkrecht zu den Kontaktflächen (43a, 43b) besitzt, die größer ist als die maximale Entfernung, in der das Magnetfeld (M) des Stopfens (1) durch die Näherungsschalter (45a, 45b) noch zuverlässig detektiert werden kann.

12. Das mobile Gerät (3) nach einem der voranstehenden Ansprüche, **dadurch gekennzeichnet,**
**dass** der Messkopf (4) mindestens einen weiteren Näherungsschalter angeordnet in der Kontaktfläche (43b) umfasst, vorzugsweise mit einem dritten Abstand zu dem ersten Näherungsschalter (45a, 45b), wobei jeder der Näherungsschalter unabhängig voneinander zur Detektion des durch den Stopfen (1) erzeugten magnetischen Feldes (M) vorgesehen ist.

13. Das mobile Gerät (3) nach einem voranstehenden Ansprüche,
**dadurch gekennzeichnet,**
**dass** das mobile Gerät (3) mindestens eine mit dem Messkopf (4) und einer Signaleinheit (6) verbundene Auswerteeinheit (5) umfasst, wobei die Signaleinheit (6) mittels eines akustischen Mittels (61) und/oder eines optischen Mittels (62) zum Aussenden eines entsprechenden akustischen und/oder optischen Lokalisierungssignals (LS) als Reaktion auf die Detektion des durch den Stopfen (1) erzeugten magnetischen Feldes (M) vorgesehen ist.

14. Das mobile Gerät nach Anspruch 13,
**dadurch gekennzeichnet,**
**dass** die Signaleinheit (6) pro Näherungsschalter (45a, 45b) ein separates optisches Mittel (62a, 62b) umfasst, das unabhängig von den anderen Näherungsschaltern (45a, 45b) nach Detektion des durch den Stopfen (1) erzeugten magnetischen Feldes (M) zum Aussenden des akustischen und/oder optischen Lokalisierungssignals (LS) vorgesehen ist.

15. Verfahren zur Lokalisierung von zumindest teilweise magnetischen Stopfen (1) mit unbekannter Position in einem Rohrsystem mittels eines mobilen Geräts (3) nach Anspruch 1 mit einen Messkopf (4), umfassend einen Messkopfkörper (41) und mindestens zwei Kontaktelemente (42a, 42b) mit jeweils einer Kontaktfläche (43a, 43b), wobei jedes der Kontaktelemente (42a, 42b) mittels geeigneter Befestigungsmittel (44) so drehbar am Messkopfkörper (41) gehaltert ist, dass eine kontaktierende Auflage der Kontaktflächen (43a, 43b) auf einer äußeren Oberfläche (21) des Rohrs (2) unabhängig vom Rohrdurchmesser ermöglicht wird, sofern der Rohrdurchmesser größer ist als ein erster Abstand (A1) zwischen den Kontaktflächen (43a, 43b) in einer Position der Kontaktelemente (42a, 42b), wo die Kontaktflächen (43a, 43b) der benachbarten Kontaktelemente (42a, 42b) gegenüberliegend zueinander ausgerichtet sind, und mindestens eine der Kontaktflächen (43a, 43b), vorzugsweise alle Kontaktflächen (43a, 43b), mindestens einen Näherungsschalter (45a, 45b) zur Detektion des durch den Stopfen (1) erzeugte magnetische Feld (M) umfasst, umfassend die Schritte
- Auflegen (AF) der mindestens zwei Kontaktelemente (42a, 42b) mit den Kontaktflächen (43a, 43b) auf die äußere Oberfläche (21) des Rohres (2) des Rohrsystems,
- weiteres Ausüben einer Kraft (K) auf den Messkopfes (4) in Richtung des Rohres (2) zum Ausrichten der Kontaktflächen (43a, 43b) mittels Drehen (DR) der Kontaktelemente (42a, 42b), so dass eine selbststabilisierende Auflageposition der Kontaktflächen (43a, 43b) auf dem Rohr (2) erreicht wird und der oder die Näherungsschalter (45a, 45b) in einen minimalen Abstand (Am) zu der äußeren Oberfläche (21) des Rohres (2) gebracht werden,
- Bewegen des Messkopfes (4) entlang einer Längsrichtung (LR) des Rohrs (2), und
- Bestimmen der Position (P2) des zumindest teilweise magnetischen Stopfens (1) mittels Detektion seines lokalen magnetischen Feldes (M) mit dem Näherungsschalter (45a, 45b).

## Claims

1. A mobile device (3) for locating plugs (1) which are at least partially magnetic and whose position in a pipe system is unknown, using a measuring head (4) comprising a measuring head body (41) and at least two contact elements (42a, 42b) that each have a contact surface (43a, 43b) that is provided for contact-making placement onto an outer surface (21) of the pipe (2) of the pipe system, whereby each of the contact elements (42a, 42b) is held rotatably on the measuring head body (41) by means of suitable fastening means (44), and at least one of the contact surfaces (43a, 43b), preferably all of the contact surfaces (43a, 43b), has at least one proximity switch (45a, 45b) in order to detect a local magnetic field (M) generated by the plug (1), whereby the fastening means (44) are configured in such a way that, due to the contact-making placement of the contact surfaces (43a, 43b), the proximity switch or switches (45a, 45b) is/are brought to a minimal distance (Am) from the surface (21) of the pipe (2), irrespective of the pipe diameter, insofar as if the pipe diameter is greater than a first distance (A1) between the contact surfaces (43a, 43b) of adjacent contact elements (42a, 42b) in a position of the contact elements (42a, 42b) where the contact surfaces (43a, 43b) of these contact elements (42a, 42b) are oriented opposite from each other, and whereby the contact elements (42a, 42b) are shaped in such a way that the contact elements (42a, 42b) permit a self-stabilizing placement position (SAP) of the contact surfaces (43a, 43b) on the surface (21) of the pipe (2).

2. The mobile device (3) according to claim 1,
**characterized in that**
the fastening means (44) are configured in such a way that the contact elements (42a, 42b) can be rotated around an axis of rotation (DA).

3. The mobile device (3) according to claim 2,
**characterized in that**
the contact elements (42a, 42b) are fastened to the measuring head body (41) by means of the fastening means (44) in such a way that the resulting axes of rotation (DA) of the individual contact elements (42a, 42b) are oriented parallel to each other.

4. The mobile device (3) according to claim 3,
**characterized in that**,
perpendicular to the axis of rotation (DA) of the contact elements (42a, 42b), the contact surfaces (43a, 43b) of the contact elements (42a, 42b) have a first extension (AD1) that matches at least a second distance (A2) of the contact surfaces (43a, 43b) of the adjacent contact elements (42a, 42b) relative to each other and perpendicular to the axis of rotation (DA), in case of a parallel orientation of the contact surfaces (43a, 43b) of the adjacent contact elements (42a, 42b) in a plane (E).

5. The mobile device (3) according to claim 4,
**characterized in that**
a second extension (AD2) of the contact surfaces (43a, 43b) of the contact elements (42a, 42b) parallel to the axis of rotation (DA) is greater than the first extension (AD1) perpendicular to the axis of rotation (DA).

6. The mobile device (3) according to one of the preceding claims,
**characterized in that**
the proximity switch (45a, 45b) is arranged in the contact surface (43a, 43b) of the contact element (42a, 42b) in a position in which, after the self-stabilizing placement of the contact element (42a, 42b) onto the surface (21) of the pipe (2), the position of the proximity switch (45a, 45b) is intersected by an imaginary line (L) leading from the mid-point (MP) of the pipe to the fastening means (44).

7. The mobile device (3) according to one of the preceding claims,
**characterized in that**
the fastening means (44) is arranged flexibly in the measuring head body (41).

8. The mobile device (3) according to one of the preceding claims,
**characterized in that**
the fastening means (44) that is to be arranged flexibly in the measuring head body (41) comprises a spring (461), and the spring (461) is preferably oriented perpendicular to the axis of rotation (DA).

9. The mobile device (3) according to claim 8,
**characterized in that**
the springs (461) of the fastening means (44) each have a spring axis that is oriented in parallel in case of adjacent contact elements (42a, 42b), and the springs axes preferably coincide.

10. The mobile device (3) according to one of the preceding claims,
**characterized in that**
an outer surface of the proximity switch (45a, 45b) does not protrude from the contact surface (43a, 43b), and the outer surface of the proximity switch (45a, 45b) is preferably flush in the plane of the contact surface (43a, 43b).

11. The mobile device (3) according to one of the preceding claims,
**characterized in that**,
perpendicular to the contact surfaces (43a, 43b), the measuring head (4) has an extension (D) that is greater than the maximum distance in which the magnetic field (M) of the plug (1) can still be reliably detected by the proximity switches (45a, 45b).

12. The mobile device (3) according to one of the preceding claims,
**characterized in that**
the measuring head (4) comprises at least another proximity switch arranged in the contact surface (43b), preferably at a third distance from the first proximity switch (45a, 45b), whereby each of the proximity switches is provided independent of each other in order to detect the magnetic field (M) generated by the plug (1).

13. The mobile device (3) according to one of the preceding claims,
**characterized in that**
the mobile device (3) comprises at least one evaluation unit (5) that is connected to the measuring head (4) and to a signal unit (6), whereby the signal unit (6) - using an acoustic means (61) and/or an optical means (62) - is provided to emit an appropriate acoustic and/or optical localization signal (LS) in response to the detection of the magnetic field (M) generated by the plug (1).

14. The mobile device (3) according to claim 13,
**characterized in that**,
for each proximity switch (45a, 45b), the signal unit (6) has a separate optical means (62a, 62b) that is provided to emit the acoustic and/or optical localization signal (LS) independently of the other proximity switches (45a, 45b) after the magnetic field (M) generated by the plug (1) has been detected.

15. A method for locating plugs (1) which are at least partially magnetic and whose position in a pipe system is unknown, using a mobile device (3) according to claim 1, with a measuring head (4) comprising a measuring head body (41) and at least two contact elements (42a, 42b) that each have a contact surface (43a, 43b), whereby each of the contact elements (42a, 42b) is held rotatably by means of suitable fastening means (44) on the measuring head body (41) in such a way as to permit a contact-making placement of the contact surfaces (43a, 43b) onto an outer surface (21) of the pipe (2), irrespective of the pipe diameter, insofar as the pipe diameter is greater than a first distance (A1) between the contact surfaces (43a, 43b) in a position of the contact elements (42a, 42b) where the contact surfaces (43a, 43b) of the adjacent contact elements (42a, 42b) are oriented opposite from each other, and at least one of the contact surfaces (43a, 43b), preferably all of the contact surfaces (43a, 43b), has at least one proximity switch (45a, 45b) in order to detect the magnetic field (M) generated by the plug (1), comprising the following steps:
• the at least two contact elements (42a, 42b) with the contact surfaces (43a, 43b) are placed onto the outer surface (21) of the pipe (2) of the pipe system,
• a force (K) continues to be exerted onto the measuring head (4) in the direction of the pipe (2) in order to orient the contact surfaces (43a, 43b) by rotating (DR) the contact elements (42a, 42b) so that a self-stabilizing placement position of the contact surfaces (43a, 43b) is achieved on the pipe (2) and the proximity switch or switches (45a, 45b) is/are brought to a minimal distance (Am) from the outer surface (21) of the pipe (2),
• the measuring head (4) is moved along a lengthwise direction (LR) of the pipe (2), and
• the position (P2) of the at least partially magnetic plug (1) is determined by means of detection of its local magnetic field (M) by means of the proximity switch (45a, 45b).

## Revendications

1. Appareil mobile (3) pour localiser des bouchons au moins partiellement magnétiques (1) ayant une position inconnue dans une tuyauterie, comportant une tête de mesure (4), comprenant un corps de tête de mesure (41) et au moins deux éléments de contact (42a, 42b) ayant respectivement une surface de contact (43a, 43b), prévu pour être mis en appui avec contact avec une surface extérieure (21) du tuyau (2) de la tuyauterie, chacun des éléments de contact (42a, 42b) étant maintenu en rotation sur le corps de tête de mesure (41) au moyen de moyens de fixation appropriés et au moins l'une des surfaces de contact (43a, 43b), et de préférence toutes les surfaces de contact (43a, 43b), comprenant au moins un commutateur de proximité (45a, 45b) pour détecter un champ magnétique local (M) généré par le bouchon (1), les moyens de fixation (44) étant conçus de telle sorte que, du fait de la mise en appui avec contact des surfaces de contact (43a, 43b), le ou les commutateurs de proximité (45a, 45b) sont positionnés à une distance minimale (Am) de la surface (21) du tuyau (2), indépendamment du diamètre du tuyau, dans la mesure où le diamètre du tuyau est supérieur à une première distance (A1) entre les surfaces de contact (43a, 43b) d'éléments de contact voisins (42a, 42b) dans une position des éléments de contact (42a, 42b) où les surfaces de contact (43a, 43b) de ces éléments de contact (42a, 42b) se font vis-à-vis, et les éléments de contact (42a, 42b) étant configurés de telle sorte que les éléments de contact (42a, 42b) permettent une position d'appui autostabilisatrice (SAP) des surfaces de contact (42a, 42b) sur la surface (21) du tuyau (2).

2. Appareil mobile (3) selon la revendication 1, **caractérisé en ce que** les moyens de fixation (44) sont conçus de telle sorte que les éléments de contact (42a, 42b) peuvent tourner le long d'un axe de rotation (DA).

3. Appareil mobile (3) selon la revendication 2, **caractérisé en ce que** les éléments de contact (42a, 42b) sont fixés au moyen des moyens de fixation (44) sur le corps de tête de mesure (41) de telle sorte que les axes de rotation résultants (DA) pour les différents éléments de contact (42a, 42b) sont orientés parallèlement entre eux.

4. Appareil mobile (3) selon la revendication 3, **caractérisé en ce que** les surfaces de contact (43a, 43b) des éléments de contact (42a, 42b) présentent, verticalement par rapport à l'axe de rotation (DA) des éléments de contact (42a, 42b), une première extension (AD1) qui correspond au moins à une deuxième distance (A2) entre les surfaces de contact (43a, 43b) des éléments de contact voisins (42a, 42b) entre elles verticalement par rapport à l'axe de rotation (DA) dans le cas d'une orientation parallèle des surfaces de contact (43a, 43b) des éléments de contact voisins (42a, 42b) dans un plan (E).

5. Appareil mobile (3) selon la revendication 4, **caractérisé en ce qu'**une deuxième dimension (AD2) des surfaces de contact (43a, 43b) des éléments de contact (42a, 42b) est, parallèlement à l'axe de rotation (DA), supérieure à la première dimension (AD1) verticalement par rapport à l'axe de rotation (DA).

6. Appareil mobile (3) selon l'une des revendications précédentes, **caractérisé en ce que** le commutateur de proximité (45a, 45b) est situé, dans la surface de contact (43a, 43b) de l'élément de contact (42a, 42b), à une position telle que, après que l'élément de contact (42a, 42b) est venu en appui autostabilisateur sur la surface (21) du tuyau (2), la position du commutateur de proximité (45a, 45b) est coupée par une ligne imaginaire (L) allant du point central du tuyau (MP) au moyen de fixation (44).

7. Appareil mobile (3) selon l'une des revendications précédentes, **caractérisé en ce que** le moyen de fixation (44) est agencé élastiquement dans le corps de tête de mesure (41).

8. Appareil mobile (3) selon l'une des revendications précédentes, **caractérisé en ce que** le moyen de fixation (44) comprend un ressort (461) aux fins de l'agencement élastique dans le corps de tête de mesure (41), le ressort (461) étant orienté de préférence verticalement par rapport à l'axe de rotation (DA).

9. Appareil mobile (3) selon la revendication 8, **caractérisé en ce que** les ressorts (461) des moyens de fixation (44) ont respectivement un axe de ressort qui est orienté parallèlement pour des éléments de contact voisins (42a, 42b), les axes de ressort étant de préférence coïncidents.

10. Appareil mobile (3) selon l'une des revendications précédentes, **caractérisé en ce qu'**une surface extérieure du commutateur de proximité (45a, 45b) ne fait pas saillie par rapport à la surface de contact (43a, 43b), la surface extérieure du commutateur de proximité (45a, 45b) étant de préférence en alignement dans le plan de la surface de contact (43a, 43b).

11. Appareil mobile (3) selon l'une des revendications précédentes, **caractérisé en ce que** la tête de mesure (4) présente une dimension (D) verticalement par rapport aux surfaces de contact (43a, 43b), laquelle est supérieure à la distance maximale à laquelle le champ magnétique (M) du bouchon (1) peut encore être détecté fiablement par les commutateurs de proximité (45a, 45b).

12. Appareil mobile (3) selon l'une des revendications précédentes, **caractérisé en ce que** la tête de mesure (4) comprend au moins un autre commutateur de proximité agencé dans la surface de contact (43b), de préférence à une troisième distance du premier commutateur de proximité (45a, 45b), les commutateurs de proximité étant chacun prévu, indépendamment l'un de l'autre, pour la détection du champ magnétique (M) généré par le bouchon (1).

13. Appareil mobile (3) selon l'une des revendications précédentes, **caractérisé en ce que** l'appareil mobile (3) comprend au moins une unité d'évaluation (5) reliée à la tête de mesure (4) et à une unité de signalisation (6), l'unité de signalisation (6) étant prévue pour émettre, à l'aide d'un moyen acoustique (61) et/ou d'un moyen optique (62), un signal de localisation acoustique et/ou optique correspondant (LS) en réaction à la détection du champ magnétique (M) généré par le bouchon (1).

14. Appareil mobile selon la revendication 13, **caractérisé en ce que** l'unité de signalisation (6) comprend, pour chaque commutateur de proximité (45a, 45b), un moyen optique distinct (62a, 62b) qui est prévu pour émettre le signal de localisation acoustique et/ou optique (LS) indépendamment des autres commutateurs de proximité (45a, 45b) après la détection du champ magnétique (M) généré par le bouchon (1).

15. Procédé de localisation de bouchons au moins partiellement magnétiques (1) ayant une position inconnue dans une tuyauterie au moyen d'un appareil mobile (3) selon la revendication 1, comportant une tête de mesure (4), comprenant un corps de tête de mesure (41) et au moins deux éléments de contact (42a, 42b) ayant respectivement une surface de contact (43a, 43b), chacun des éléments de contact (42a, 42b) étant maintenu en rotation sur le corps de tête de mesure (41) au moyen de moyens de fixation appropriés (44) de manière à permettre une mise en appui avec contact des surfaces de contact (43a, 43b) sur une surface extérieure (21) du tuyau (2) indépendamment du diamètre du tuyau, dans la mesure où le diamètre du tuyau est supérieur à une première distance (A1) entre les surfaces de contact (43a, 43b) dans une position des éléments de contact (42a, 42b) où les surfaces de contact (43a, 43b) des éléments de contact voisins (42a, 42b) se font vis-à-vis, et au moins l'une des surfaces de contact (43a, 43b), et de préférence toutes les surfaces de contact (43a, 43b), comprenant au moins un commutateur de proximité (45a, 45b) pour détecter le champ magnétique (M) généré par le bouchon (1), comprenant les étapes suivantes :
- mise en appui (AF) des au moins deux éléments de contact (42a, 42b) avec les surfaces de contact (43a, 43b) sur la surface extérieure (21) du tuyau (2) de la tuyauterie ;
- poursuite de l'exercice d'une force (K) sur la tête de mesure (4) en direction du tuyau (2) pour orienter les surfaces de contact (43a, 43b) en faisant tourner (DR) les éléments de contact (42a, 42b) de manière à obtenir une position d'appui autostabilisatrice des surfaces de contact (43a, 43b) sur le tuyau (2) et de manière à positionner les commutateurs de proximité (45a, 45b) à une distance minimale (Am) de la surface extérieure (21) du tuyau (2) ;
- déplacement de la tête de mesure (4) le long d'une direction longitudinale (LR) du tuyau (2) et
- détermination de la position (P2) du bouchon au moins partiellement magnétique (1) par détection de son champ magnétique local (M) au moyen du commutateur de proximité (45a, 45b).
